# EUROPEAN PATENT SPECIFICATION

(11) **EP 1 923 303 B1**
(45) Date of publication and mention of the grant of the patent: **09.12.2009**
(21) Application number: 06124201.2
(22) Date of filing: 16.11.2006
(51) Int. Cl.: B62K 5/00

(54) **Four wheeled vehicle with tilting frames**
Vierrädriges Fahrzeug mit kippenden Rahmen
Véhicule à quatre roues avec cadres basculants

(43) Date of publication of application: 21.05.2008
(73) Proprietor: Torre, Sergio, 16129 Genova (IT)
(72) Inventor: Torre, Sergio, 16129 Genova (IT)
(74) Representative: Borsano, Corrado

(56) References cited:
- WO-A-03/101817
- FR-A1- 2 836 447
- JP-A- 3 153 484
- JP-A- 4 183 693

## Description

The present invention relates to a vehicle having tilting frames and, more precisely, to a four wheeled vehicle having a rear unit and two front tilting cells.

Three or four-wheels tilting vehicles are already know in the art. For example, in EP 0502830 A1 there is disclosed a four-wheels vehicle having a general structure of a motorcycle but with two rear and two front wheels. This can assure stability both in standstill and in motion condition.

In EP 1484239 A2 a three wheel rolling vehicle with front two-wheel steering is shown in order to reach the stability of a car with the dimension of a scooter allowing two people to sit one behind the other without any passive safety system and/or protection.

In another kind of vehicles, such as the prototypes Piaggio "Zedis" and Honda "Gyro" there is provided a rear frame having two wheels, and a front tilting frame having one wheel. The front frame is hinged to the rear one by means of a structural hinge allowing the former tilting about the latter. The front frame may comprise a safety cell. In this case, the vehicle has usually place only for the driver.

On the other hand, a scooter produced by BMW "Model C1" comprises a safety cell only for the driver who is allowed to drive the vehicle wearing seat belts without any helmet, whereas the passenger has to sit behind the safety cell and to wear an helmet.

Further, Mercedes "Life Jet F300" concept, shows a tilting vehicle with two front wheels and a single rear one, and comprises a safety cell capable to house two people seated in a row arrangement, one behind the other.

Various other concepts (see FR-A-2 836 447) have been developed with a combination of the abovementioned features.

A main disadvantage of all of the abovementioned embodiments of vehicles is that none of them provide a vehicle with tilting frames wherein occupants can be seated in a side by side arrangement, and at the same time can provide safety and/or weather protections.

Another problem to be solved for the non-tilting four-wheels-vehicles is the limited adherence to the ground, since during a bend the rolling torques generates an irregular distribution of the vertical forces on the wheels causing a non-optimum saturation of the potential grip to the ground for the vehicle. This is particularly true for all the vehicles that are comfortable for city-use presenting high height and relatively small width.

Therefore, the main object of the present invention is to solve the abovementioned disadvantages by providing a vehicle having tilting frames and, more precisely, a four wheeled vehicle having a rear unit and two front tilting cells and, at the same, allowing two people to be sit side by side.

The present invention provides a four wheeled vehicle having a rear traction unit and front tilting frames according to the annexed claims.

The present invention provides a vehicle provided with tilting frames having a first advantage of the dynamics of a tilting vehicle with the consequent optimization of the adherence to the ground and a greater comfort to centrifugal forces.

A second advantage of the present invention consist in the eventual protection due to the arrangement of a safety cell for each occupant. This solution allows to build vehicles much lighter than a standard city car but with improved safety standards.

A detailed description of the vehicle having tilting frames of the present invention will be given in the following, as a non limiting example and with reference to the attached drawings, wherein:
Fig. 1 shows a schematic side view of the vehicle of the present invention;

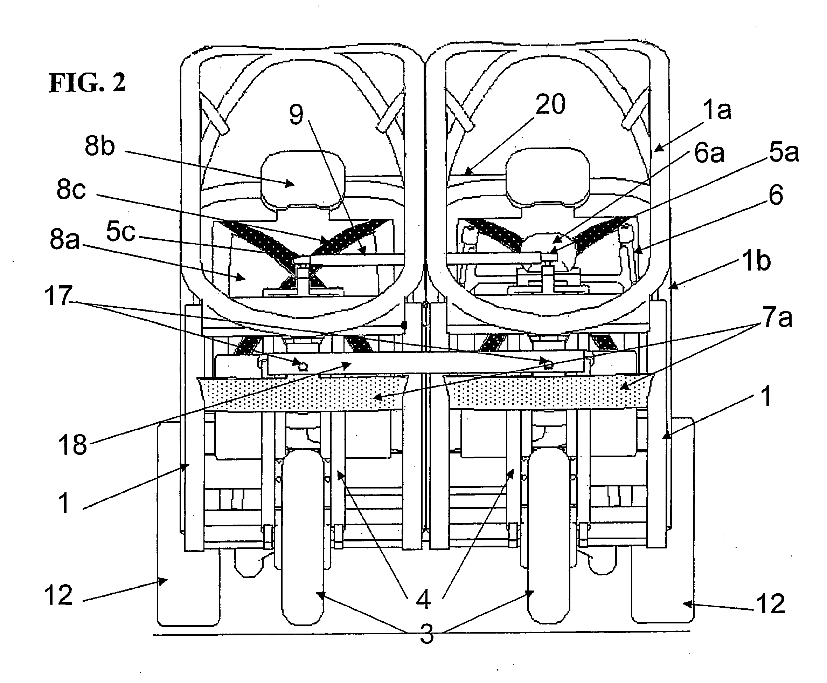

Fig. 2 shows a schematic front view of the vehicle in a zero-degree tilted condition, according to the present invention;

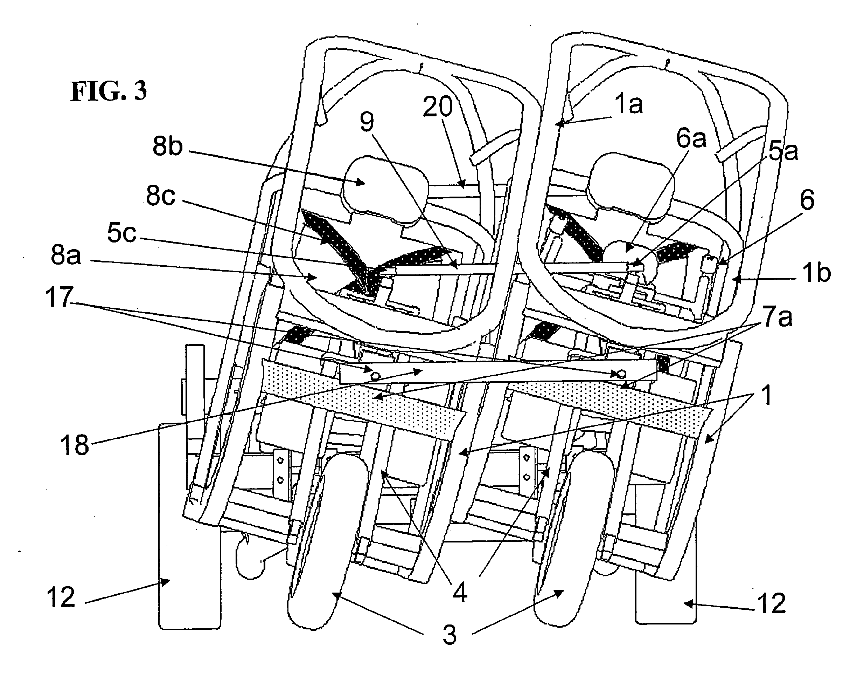

Fig. 3 shows a schematic front view of the vehicle of figure 2, and in a tilted condition;

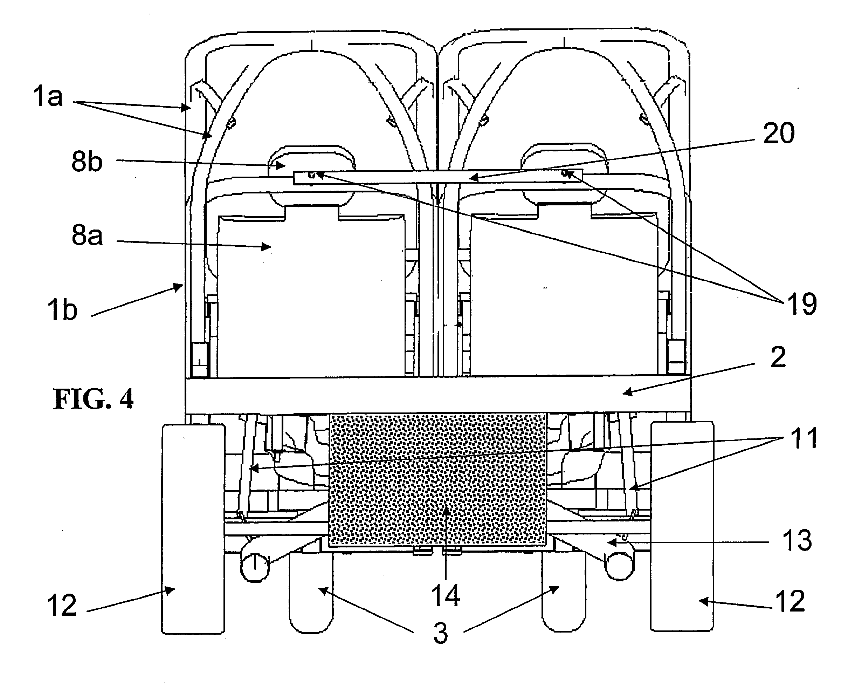

Fig. 4 shows a schematic rear view of the vehicle in a zero-degree tilted condition;
Fig. 5 shows a schematic rear view of the vehicle in a tilted condition;

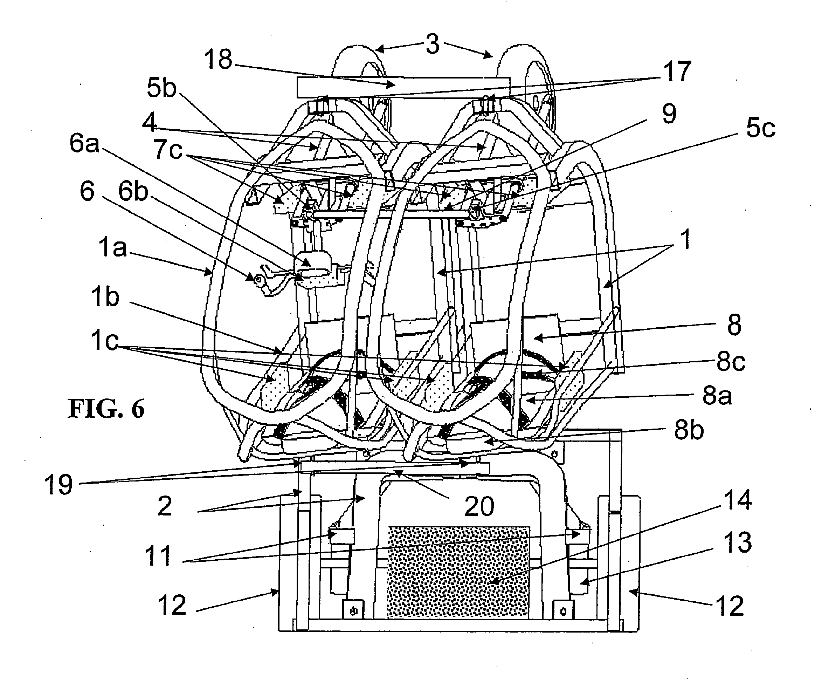

Fig. 6 shows a schematic top view of the vehicle in a tilted condition;
Fig. 7 shows a detail view of a structural component comprising a joining hinge;
Fig. 8 shows a detailed view of a part of the vehicle of the present invention and the orientation of its rear and front joints axles;
Fig. 9 shows schematically the concept of the steering system of the vehicle of the present invention;
Fig. 10 shows schematically a non linear four bar linkage of the steering system of the vehicle of the present invention;
Fig. 11 shows schematically an application of an hydraulic actuator to the vehicle of the present invention; and

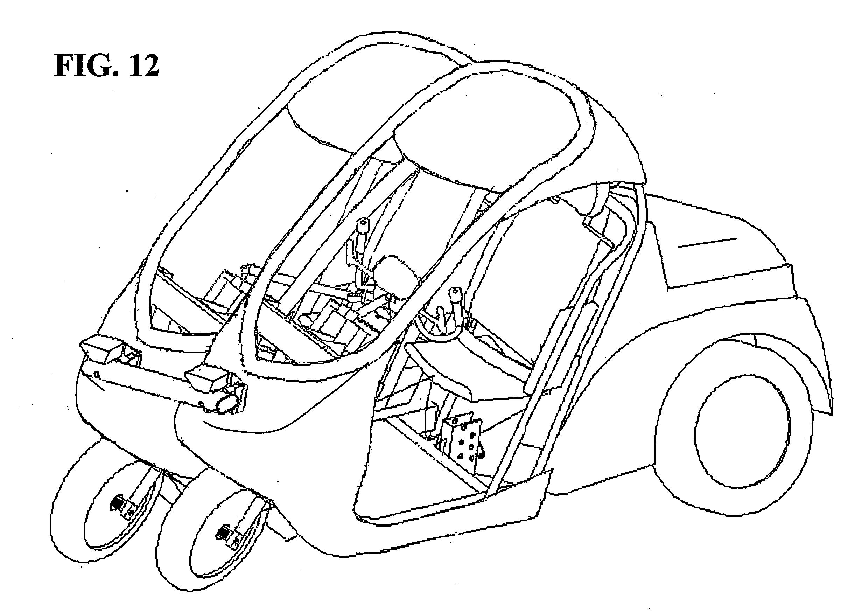

Fig. 12 shows in a perspective view an embodiment of the vehicle of the present invention in a steered and tilted condition.

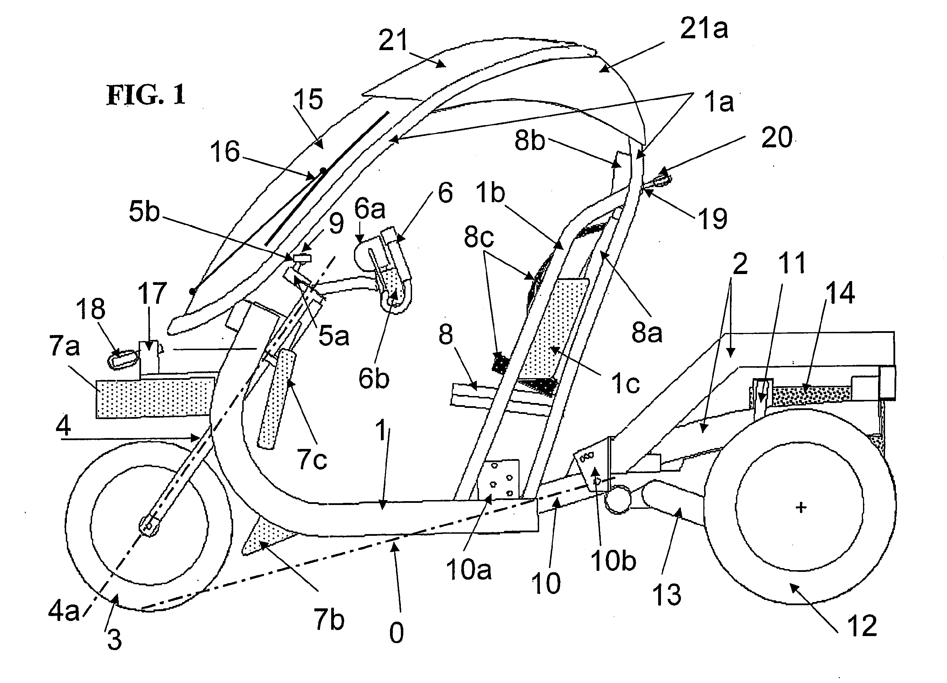

With reference now to the Figures and in particular to Figure 1, a four-wheels vehicle according to the invention comprises three main parts: two front frames 1 and a rear unit 2. Each frame 1 has a cell mounted thereon for the housing of a passenger.

Each cell or frame 1 is equipped with a front wheel 3 linked and hinged to the chassis 1 by a fork 4, that also act as suspension system, a seat 8, a main hinge 10, used for connection to the rear unit, and one or more secondary joints 17 and 19 that connect by means of relevant bars 18 and 20 the two cells with each other, the arrangement allowing the kinematics of a four bar linkage.

The two front wheels 3 can steer when proper action is given by the driver. To this aim, the front cell used by the driver has a master steering system whereas the other cell is equipped with a slave steering system.

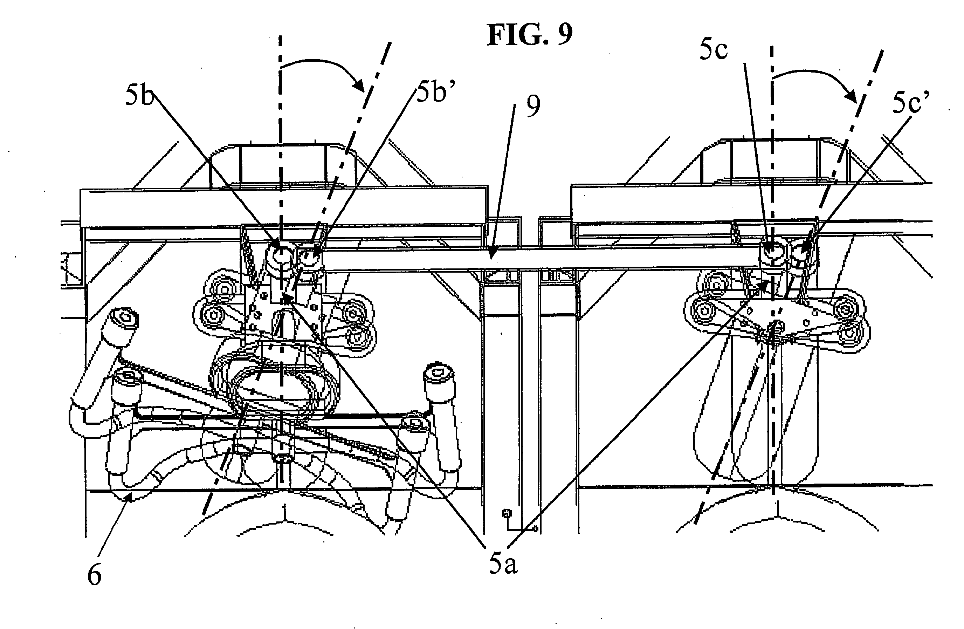

A system capable of transferring motion from the master to the slave is used in order to maintain co-ordination between the steering angle of the two front wheels 3. As an example, a four bar linkage system is shown in Fig. 9.

As can be seen in the figure, the steering axes 4a of the two wheels 3 act as ground axes. Each steering system master and slave is then equipped with inner and outer bars, 5a. The two bars are connected through a linking rod 9 whose ends are equipped with spherical joints 5b, 5c.

As can be understood, when the master steering system 6 turns, the joints 5b moves to 5b', and 5c move to 5c', so the slave steering system turns too.

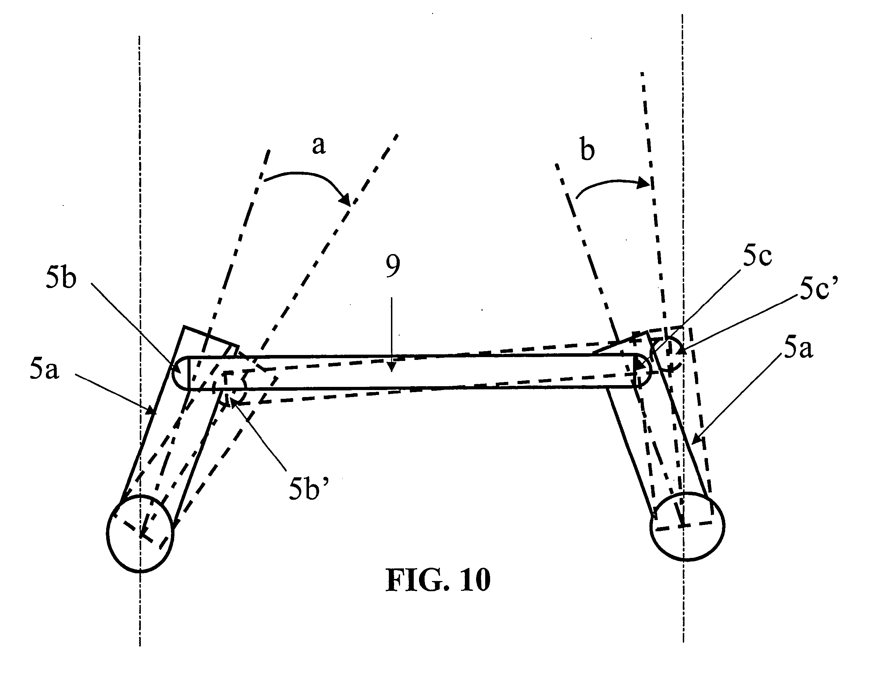

The system above described allows to vary the steering angle of the slave as a function of the steering angle of the master by changing the geometry of the mechanism as schematically shown in Figure 10. In this case, if the inner and outer bars 5a are strictly parallel, then the inner and outer tilting angle are identical whereas if both converge to a point, then the inner and outer angles are not linearly dependent; as shown in Figure 10 the inner angle "a" is definitely bigger than the outer angle "b".

It will be apparent to those skilled in the art that other different systems may be used to obtain the same function of co-operating the master steering angle with the slave one.

The master steering system, i.e. the driver system, further comprises a full set of controls that are available at hand through a hybrid of a steering wheel and a handle bar 6. All the controls such as accelerator, brakes, clutch and gear, lights, indicators, instrument panel 6a and all the other necessary and auxiliary ones are then easily managed through the steering handle 6. Legs and feet of the driver are therefore free from any driving action, thus allowing through a simple adjustment of the steering handle 6 with respect to the seat the best ergonomic position.

Furthermore, the passenger seat may present an auxiliary handle, not capable to transfer steering forces to the wheel 3.

As can be seen in Figure 1, in order to protect the occupants, the cells can be provided with safety equipment such as upper safety frames 1a, side safety frames 1b, side protections sidebags 1c, backrest 8a, headrest 8b, front absorbers 7a, front wheel energy absorber 7b, one or two safety belts 8c, or other equivalent devices, knee-protections 7c, front airbag 6b, windscreen 15, wiper system 16, roof 21, rear-window 21a.

Side protections from the weather can be used, particularly if a servomechanism for the tilting movement is provided in order to guarantee an adequate dynamic reaction of the vehicle to side pressure of the wind.

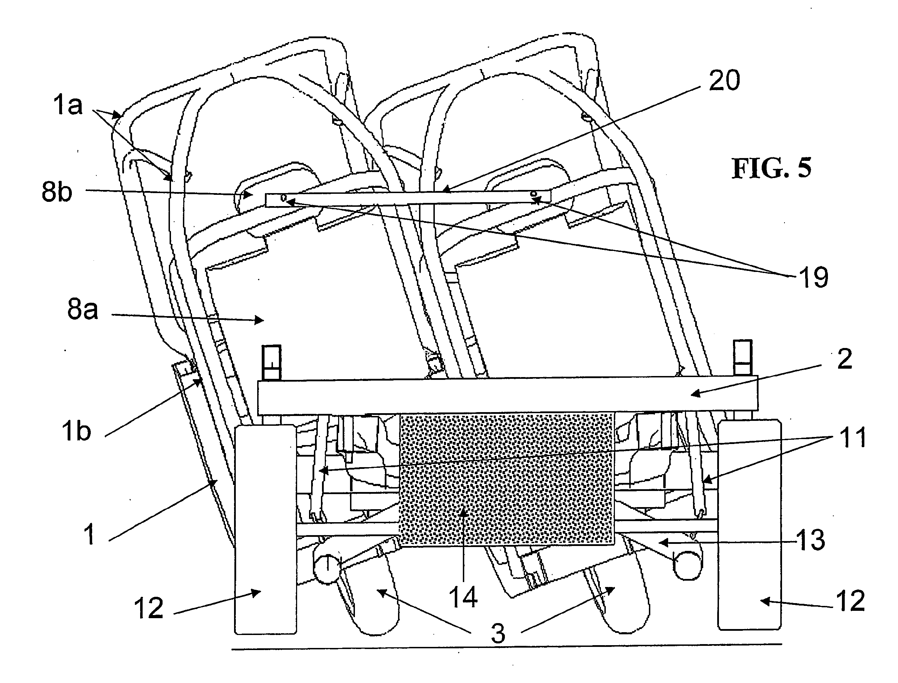

On the other hand and as can be noted in Figures 1 and 5, layout of the rear unit includes an internal combustion or electrical engine 14, centrally mounted to the unit and two side wheels 12. The torque transmission can be obtained by a manual or automatic gearbox and a differential gear. Wheels are connected to the frame 2 of the rear unit by a rear suspension system 13 and 11.

The rear unit further includes all the standard necessary auxiliary systems for the functioning of the engine: cooling system, etc.

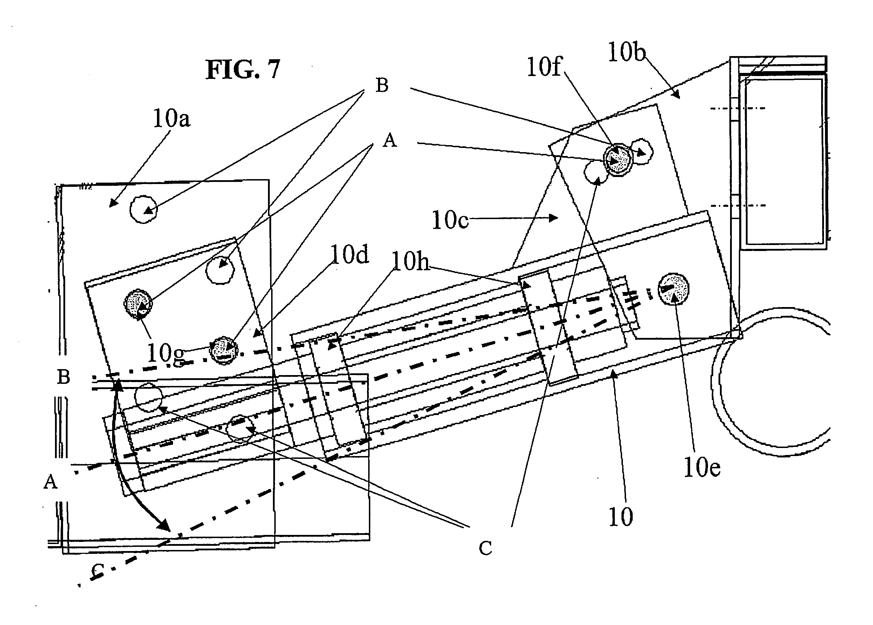

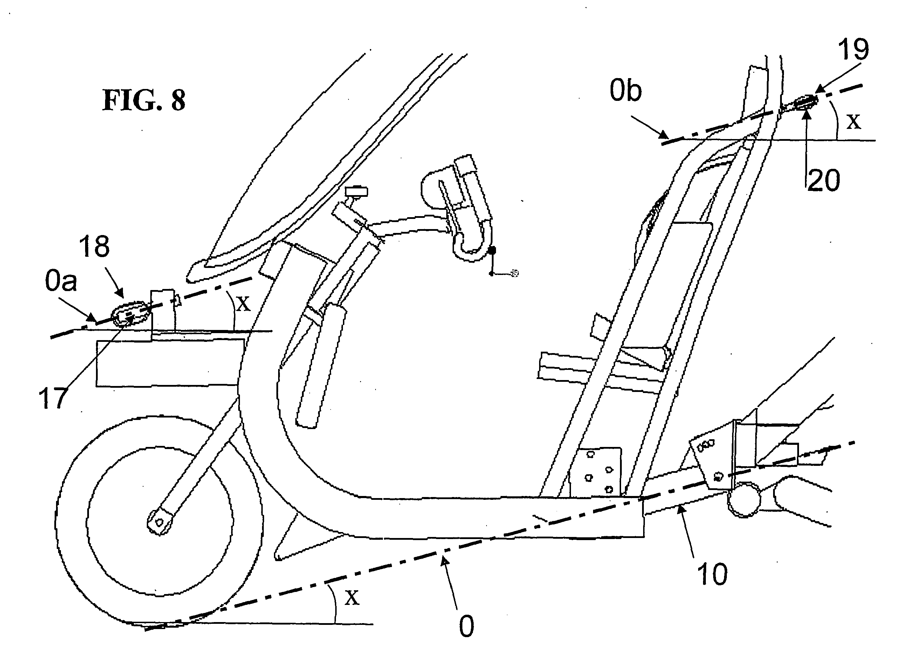

With reference now to Figure 7 and 8, a rotational joint or hinge 10 mounted between the rear unit and each of the front units, allows the latest to tilt about their axis. Whereas the preferred direction of the axis "0" is that passing through the contact point between the front wheel 3 and the ground, it is possible to adjust the inclination of the tilting axis to obtain different dynamic behaviours.

Figure 7 shows a possible solution for the hinge joint group. This group is made of the following parts: bearing group shaft, shaft support, bearings, interface with the rear unit 10c, interface with the front cell 10d. The shaft is free to rotate within the shaft support by means of two roller bearings 10h. Roller bearings minimise friction and guarantees smooth movements. The interface with the rear unit between 10c and 10b is made by a pivot joint 10e that can be locked by mean of pin 10f in a specific position.

At the interface with the front cell between 10d and 10a, two pins 10g are used to lock the bearing group in the position corresponding to the one choose for the rear unit. By changing the position of the pins in the rear unit 10f and in the front cell interface 10g it is possible to swing up and down the bearing group around the hinge 10e, thus allowing different orientations of the tilting axis "0". In the Figure 7, a simplified solution with 3 pre-set positions A, B, C is shown.

With reference to Figure 8, the tilting motion of the two cells 1 is synchronised through two rods 18 and 20 that constitute each a parallel four bar linkages. In the Figure, the parallelism of all the hinges' axis is shown. If the inclination of the main axis "0" changes also the inclination of axis "0a" and "0b" has to be reoriented. The tilting axes "0" of the cells act as ground points for the mechanisms. The driver's cell is the inner member and the passenger's cell is the outer member for both of them.

The rod 20 is placed behind the cells while the other rod 18 is placed in front of them. The first four bar linkage, i.e. rear four bar linkage is therefore constituted of left cell axis "0", left cell hinge on aft-bar 20, right cell hinge on aft-bar 20, and right cell axis "0".

On the other hand, the other four bar linkage, i.e. front four bar linkage replace rear component 20 with front component 18, but the behaviour is analogous as the former. With this arrangement, the two rods 18 and 20 link the two cells so that the tilt angle of a cell is constrained to the tilt angle of the other one.

As described before with reference to Figure 10 and the steering system, the position of rotational joints 19 or 17 of the mechanism may be also adjusted to allow different dynamic behaviour of the vehicle, i.e. if the inner and outer bars/frames are strictly parallel the inner and outer tilting angle are identical, whereas if the two bars/frames converge to a point then the inner and outer angles differs.

The same applies for what concerns the joint 10 shown in Figure 7, and more precisely by changing its orientation about hinge 10e, and therefore the orientation of the tilting axis "0", also the dynamic behaviour of the vehicle changes.

Further, a locking device not shown in the figures for blocking the mutual tilting of the cells with respect to the rear unit can be provided in order to avoid the need of a foot support when provided, i.e. while parking, or traffic or servicing conditions. An elementary solution can be, for example, a brake or a more sophisticated device on the main hinge component 10.

In normal driving conditions, the cell may be free to tilt and steer independently according to the driver input. For instance, when improved stability and driving easiness is desired, a servo-mechanism may be used to control the tilting angle of the cells.

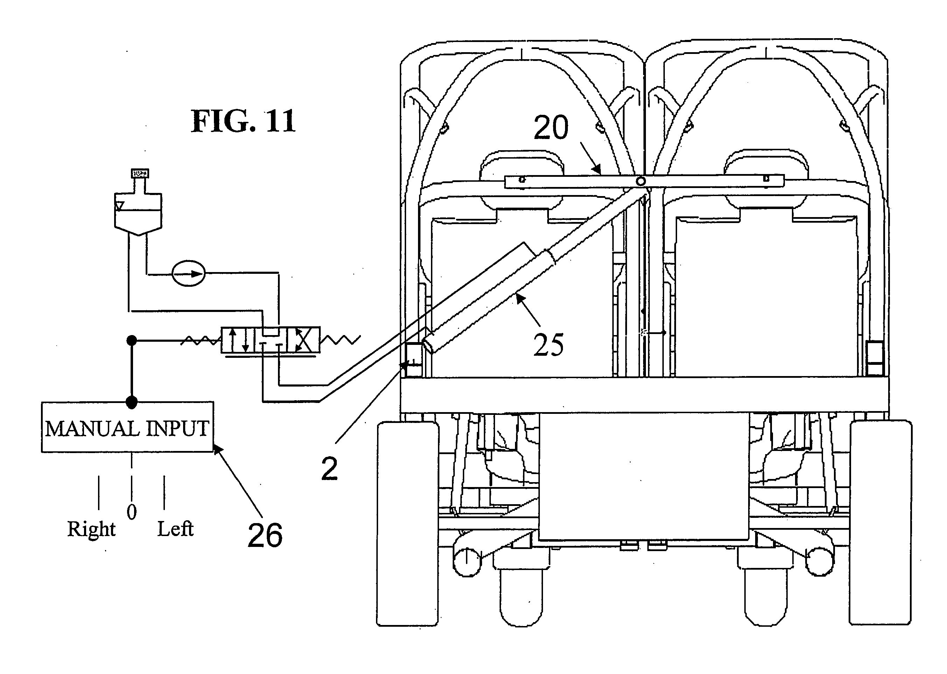

With this aim, a simple solution is shown in Figure 11. In the figure, an hydraulic actuator 25 is used to link the rear unit frame 2 with the bar 20. Thanks to a manual switch 26, an hydraulic circuit, and a valve the actuator length can be change making the two cells tilting right or left. In a different embodiment, a more sophisticated servoactuated control system shall automatically act considering all the kinematics and dynamic parameters of the vehicle.

To this aim, will be apparent that other suitable solutions can be applied, i.e. an electrically or hydraulically powered motor coupled to the tilting axis by means of a gear, a wire drive system actuated by a sheave coupled to a motor, etc.

Further, to those skilled in the art will be apparent that the tilting motion of the present vehicle resembles that of a motorcycle. In a two seat embodiment, the driver and the passenger are seated side by side and one per each cell. Alternatively, a four seat embodiment may be provided by placing two seats per cell.

According to this embodiment, the rear unit has two wheels and a driving transmission module between them, as may be derived from any series city cars with rear traction, and each of the front cells has a wheel 3.

The frames used for the front cells may also act as safety frames allowing adequate protection to the passengers in case of accident. The presence of safety belts or other protection systems may allow the occupants to avoid using helmets, as well as a weather protection can be also attained.

## Claims

1. Four wheeled vehicle, comprising a rear traction unit (2) having two wheels, and two front frames (1) arranged in a side by side manner and for transporting each at least one passenger on a respective seat,
said two front frames (1) being connected in a tilting manner with respect to said rear unit (2) and about their respective tilting axis (0) by means of a hinge joint (10),
each frame (1) comprising a front wheel (3) mounted on a respective fork (4) of a steering system (5a,5b,5c,6,9),
said two front frames (1) being movable in a synchronised tilting motion each with respect to the other and for co-operating with said rear traction unit (2), and according to the dynamic behaviour of said vehicle.

2. Four wheeled vehicle according to claim 1, wherein said tilting axis (0) of said frames (1) has a direction which passes through a contact point of said front wheel (3) and the ground.

3. Four wheeled vehicle according to claim 1 or 2, wherein the direction of said tilting axis (0) may be varied according to the mounting of said hinge joint (10) with respect to said rear unit (2) and said two front frames (1).

4. Four wheeled vehicle according to claim 1 or 2 or 3, wherein said front frames (1) comprises each a cell which includes safety frames (1a,1b) and equipment for the passenger.

5. Four wheeled vehicle according to any of the preceding claims, further comprising an actuator (25) mounted onto said frames (1) or cells and said rear unit (2), the arrangement being such that the actuator co-operates for the tilting of said frames (1) with respect to said rear unit (2).

6. Four wheeled vehicle according to the preceding claim, wherein said actuator (25) can be remotely servocontrolled for co-operating during the tilting of said cells with respect to said rear unit.

7. Four wheeled vehicle according to the preceding claim, wherein said actuator (25) is chosen from the group comprising:
mechanical actuators/system;
electrical actuators;
hydraulic actuators;
pneumatic actuators;
or a combination thereof.

8. Four wheeled vehicle according to any of the preceding claims, wherein said steering system comprises a master steering device (4,5a,5b) corresponding to a driver's seat and having a steering bar or wheel (6), and a slave steering device (4,5a,5c,9) corresponding to a passenger seat.

9. Four wheeled vehicle according to the preceding claim, wherein the master steering device (6) comprises almost the whole of the driving controls.

10. Four wheeled vehicle according to any of the preceding claims, further comprising a locking means for the blocking of the tilting motion of said frames (1) with respect to said rear unit (2).

11. Four wheeled vehicle according to the preceding claim, wherein said locking means comprises a brake means co-operating with said hinge joint (10).

## Patentansprüche

1. Vierradfahrzeug, umfassend eine hintere Zugkrafteinheit (2) mit zwei Rädern und zwei vordere Rahmen (1), die auf nebeneinander liegende Weise und zum Transport zumindest jeweils eines Fahrgasts auf einem jeweiligen Sitz angeordnet sind,
wobei die zwei vorderen Rahmen (1) auf eine kippende Weise mit Bezug auf die hintere Einheit (2) und um ihre jeweiligen Kippachsen (0) mittels einer Gelenkverbindung (10) verbunden sind,
wobei jeder Rahmen (1) ein Vorderrad (3) umfasst, das an einer jeweiligen Gabel (4) eines Lenksystems (5a, 5b, 5c, 6, 9) montiert ist,
wobei die zwei vorderen Rahmen (1) in einer synchronisierten Kippbewegung jeweils mit Bezug zu dem anderen und zum Zusammenwirken mit der hinteren Zugkrafteinheit (2) und gemäß dem dynamischen Verhalten des Fahrzeugs bewegbar sind.

2. Vierradfahrzeug nach Anspruch 1,
wobei die Kippachse (0) der Rahmen (1) eine Richtung aufweist, die durch einen Kontaktpunkt des Vorderrades (3) und dem Boden verläuft.

3. Vierradfahrzeug nach Anspruch 1 oder 2,
wobei die Richtung der Kippachse (0) gemäß der Befestigung der Gelenkverbindung (10) mit Bezug auf die hintere Einheit (2) und den beiden vorderen Rahmen (1) verändert sein kann.

4. Vierradfahrzeug nach Anspruch 1 oder 2 oder 3,
wobei die vorderen Rahmen (1) jeweils eine Zelle umfassen, die Sicherheitsrahmen (1a, 1b) und Ausrüstung für den Fahrgast umfasst.

5. Vierradfahrzeug nach einem der vorhergehenden Ansprüche,
das ferner einen Aktor (25) umfasst, der an den Rahmen (1) oder Zellen und der hinteren Einheit (2) befestigt ist, wobei die Anordnung derart ist, dass der Aktor für das Kippen der Rahmen (1) mit Bezug auf die hintere Einheit (2) zusammenwirkt.

6. Vierradfahrzeug nach dem vorhergehenden Anspruch,
wobei der Aktor (25) von fern servogesteuert sein kann, um während des Kippens der Zellen mit Bezug auf die hintere Einheit zusammenzuwirken.

7. Vierradfahrzeug nach dem vorhergehenden Anspruch,
wobei der Aktor (25) aus der Gruppe ausgewählt ist, die umfasst:
mechanische Aktoren/mechanisches System;
elektrische Aktoren;
hydraulische Aktoren;
pneumatische Aktoren;
oder eine Kombination davon.

8. Vierradfahrzeug nach einem der vorhergehenden Ansprüche,
wobei das Lenksystem eine Hauptlenkeinrichtung (4, 5a, 5b), die einem Fahrersitz entspricht und einen Lenkstab oder ein Lenkrad (6) aufweist, und eine Hilfslenkeinrichtung (4, 5a, 5c, 9), die einem Fahrgastsitz entspricht, umfasst.

9. Vierradfahrzeug nach dem vorhergehenden Anspruch,
wobei die Hauptlenkeinrichtung (6) beinahe die gesamten Fahrsteuereinrichtungen umfasst.

10. Vierradfahrzeug nach einem der vorhergehenden Ansprüche,
das ferner ein Sperrmittel zum Blockieren der Kippbewegung der Rahmen (1) mit Bezug auf die hintere Einheit (2) umfasst.

11. Vierradfahrzeug nach dem vorhergehenden Anspruch,
wobei das Verriegelungsmittel ein Bremsmittel umfasst, das mit der Gelenkverbindung (10) zusammenwirkt.

## Revendications

1. Véhicule à quatre roues, comprenant une unité à traction arrière (2) ayant deux roues, et deux cadres avant (1) agencés côte à côte et pour transporter chacun au moins un passager sur un siège respectif,
lesdits deux cadres avant (1) étant connectés d'une manière basculante par rapport à ladite unité arrière (2) et autour de leur axe de basculement respectif (0) au moyen d'une jonction à charnière (10),
chaque cadre (1) comprenant une roue avant (3) montée sur une fourche respective (4) d'un système de direction (5a, 5b, 5c, 6, 9),
lesdits deux cadres avant (1) pouvant être déplacés dans un mouvement de basculement synchronisé l'un par rapport à l'autre pour coopérer avec ladite unité de traction arrière (2), et en fonction du comportement dynamique dudit véhicule.

2. Véhicule à quatre roues selon la revendication 1, dans lequel ledit axe de basculement (0) desdits cadres (1) a une direction qui traverse un point de contact de ladite roue avant (3) et le sol.

3. Véhicule à quatre roues selon la revendication 1 ou 2, dans lequel la direction dudit axe de basculement (0) peut être variée en fonction du montage de ladite jonction à charnière (10) par rapport à ladite unité arrière (2) et desdits deux cadres avant (1).

4. Véhicule à quatre roues selon la revendication 1, 2 ou 3, dans lequel lesdits cadres avant (1) comprennent chacun une cellule qui comprend des cadres de sécurité (1a, 1b) et des équipements pour le passager.

5. Véhicule à quatre roues selon l'une quelconque des revendications précédentes, comprenant en outre un actionneur (25) monté sur lesdits cadres (1) ou lesdites cellules et ladite unité arrière (2), l'agencement étant tel que l'actionneur coopère pour le basculement desdits cadres (1) par rapport à ladite unité arrière (2).

6. Véhicule à quatre roues selon la revendication précédente, dans lequel ledit actionneur (25) peut être servocommandé à distance pour coopérer pendant le basculement desdites cellules par rapport à ladite unité arrière.

7. Véhicule à quatre roues selon la revendication précédente, dans lequel ledit actionneur (25) est choisi dans le groupe se composant de :
actionneurs/système mécaniques ;
actionneurs électriques ;
actionneurs hydrauliques ;
actionneurs pneumatiques ;
ou une combinaison de ceux-ci.

8. Véhicule à quatre roues selon l'une quelconque des revendications précédentes, dans lequel ledit système de direction comprend un dispositif de direction maître (4, 5a, 5b) correspondant à un siège de conducteur et ayant une barre de direction ou un volant (6), et un dispositif de direction esclave (4, 5a, 5c, 9) correspondant à un siège de passager.

9. Véhicule à quatre roues selon la revendication précédente, dans lequel le dispositif de direction maître (6) comprend pratiquement l'intégralité des commandes de conduite.

10. Véhicule à quatre roues selon l'une quelconque des revendications précédentes, comprenant en outre un moyen de verrouillage pour le blocage du mouvement de basculement desdits cadres (1) par rapport à ladite unité arrière (2).

11. Véhicule à quatre roues selon la revendication précédente, dans lequel ledit moyen de verrouillage comprend un moyen de freinage coopérant avec ladite jonction à charnière (10).
